# EUROPEAN PATENT APPLICATION

(11) **EP 4 847 282 A1**
(43) Date of publication of application: **02.12.2026**
(21) Application number: 25806777.6
(22) Date of filing: 27.04.2025
(51) Int. Cl.: B60H 1/00, B60H 1/32, B60H 1/14

(54) **THERMAL MANAGEMENT SYSTEM, AND DEFROSTING CONTROL METHOD AND APPARATUS, VEHICLE, DEVICE AND MEDIUM**

(30) Priority: 24.05.2024 CN 202410661333
(71) Applicant: Guangzhou Automobile Group Co., Ltd., Guangzhou, Guangdong 511434 (CN)
(72) Inventor: WANG, Qiaojun, Guangzhou, Guangdong 511434 (CN); ZENG, Zhixin, Guangzhou, Guangdong 511434 (CN); PENG, Changbo, Guangzhou, Guangdong 511434 (CN); ZHU, Liang, Guangzhou, Guangdong 511434 (CN); XIANG, Dong, Guangzhou, Guangdong 511434 (CN); RUAN, Xianzhen, Guangzhou, Guangdong 511434 (CN)
(74) Representative: Herrero & Asociados, S.L.
(86) International application number: PCT/CN2025/091498
(87) International publication number: WO 2025/241838

(57) **Abstract**

Proposed are a thermal management system, a defrosting control method and apparatus, a device and a medium, which relate to the technical field of vehicles. In the present application, when defrosting is required for a low-temperature radiator, a target heat source capable of participating in defrosting is selected from a plurality of candidate heat sources of the thermal management system of the present application, and heat from the target heat source is transferred, by means of liquid-liquid heat exchange and/or heat transfer through coolant circulation, to the low-temperature radiator to perform defrosting. By utilizing a defrosting loop determined based on the target heat source, the heat from the target heat source is transferred, thereby enabling recycling of heat in different branches/loops of the thermal management system and reducing defrosting energy consumption.

## Description

The present application claims the priority of the Chinese invention patent application with the invention name "Thermal Management System, Defrosting Control Method and Apparatus, Vehicle, Device and Medium" submitted to the China Patent Office on May 24, 2024, application No. 202410661333.2, the entire contents of which are hereby incorporated by reference.

### TECHNICAL FIELD

The present application relates to the technical field of vehicles, and in particular, to a thermal management system, a defrosting control method and apparatus, a vehicle, an electronic device and a storage medium.

### BACKGROUND

Currently, in order to address the issues of driving range attenuation at low temperatures and excessive heating energy consumption of traditional PTC solutions for air conditioning systems of hybrid/range-extended electric vehicles in an electric vehicle mode, each of most vehicles is equipped with a heat pump air conditioning system, which absorbs heat from ambient air through a heat exchanger (such as an outdoor evaporator) arranged in a heat pump air conditioning loop, i.e. a refrigerant loop to provide air-source heat pump heating for the vehicle. However, in a current heat pump solution, frosting may occur on the heat exchanger when absorbing heat using an air source at low temperatures such as 10°C to -5°C, thereby affecting the energy efficiency and heating effect of the system.

Currently, defrosting of the heat exchanger of the heat pump air conditioning system can be achieved by switching the air conditioning system to a cooling mode to transfer heat to the outdoor evaporator. However, this manner affects the comfort of the occupant cabin temperature and the user experience. Therefore, PTC auxiliary heating defrosting is mainly used. However, PTC auxiliary heating defrosting is energy-intensive, costly, and inefficient.

Therefore, how to propose a vehicle thermal management system capable of providing a plurality of selectable heat sources for defrosting tasks, and how to propose a defrosting control method with low energy consumption implemented based on the thermal management system, have become urgent problems to be solved.

### SUMMARY

Based on this, in view of the above technical problems, it is necessary to provide a thermal management system, a defrosting control method and apparatus, a vehicle, an electronic device and a storage medium, to solve the problem of high energy consumption during defrosting of outdoor heat exchangers in current vehicles.

A thermal management system includes: a coolant loop, and a refrigerant loop provided with a condenser and a battery chiller, where
the coolant loop includes an electric water pump branch, a low-temperature heat dissipation branch provided with a low-temperature radiator, a battery cooling loop provided with the battery chiller, a heater water pump branch provided with the condenser, and a heat exchanger;
a first end of a line at one side of the heat exchanger is in communication with a first end of the heater water pump branch, and a second end of the heater water pump branch is in communication with a second end of the line at one side of the heat exchanger;
a first end of the electric water pump branch is in communication with a first end of a line at the other side of the heat exchanger, a second end of the line at the other side of the heat exchanger is in communication with a first end of the low-temperature heat dissipation branch, and a second end of the low-temperature heat dissipation branch is in communication with a second end of the electric water pump branch; and
when the thermal management system operates in an air-source heat pump mode, the low-temperature radiator is configured to absorb heat from ambient air.

In an embodiment of the present application, the refrigerant loop includes a compressor, a hot-gas bypass branch, and a heat pump branch provided with the condenser and the battery chiller, where the hot-gas bypass branch and the heat pump branch are connected in parallel with the compressor, respectively.

In an embodiment of the present application, the coolant loop further includes a proportional three-way valve and a coolant bypass branch, where
a first end of the coolant bypass branch is in communication with the first end of the heater water pump branch, and a second end of the coolant bypass branch is in communication with the second end of the heater water pump branch; and
three ports for random communication among the line at one side of the heat exchanger, the heater water pump branch, and the coolant bypass branch are communicated by the proportional three-way valve.

A defrosting control method, where based on the thermal management system as described in any of the above embodiments, the method includes:
determining whether defrosting is required for the low-temperature radiator in the thermal management system;
if defrosting is required for the low-temperature radiator, selecting a heat source that meets any preset heating condition from a plurality of candidate heat sources which are in a water-source heat pump mode to be a target heat source for performing defrosting; and
determining a defrosting loop based on a heat transfer path from the target heat source to the low-temperature radiator in the thermal management system.

In an embodiment of the present application, the determining whether defrosting is required for the low-temperature radiator in the thermal management system includes:
if a heat source mode in which the thermal management system currently operates includes the air-source heat pump mode, acquiring an ambient temperature and a coolant temperature at the inlet of the low-temperature radiator; and
according to the ambient temperature and the coolant temperature, determining whether defrosting is required for the low-temperature radiator.

In an embodiment of the present application, the selecting a heat source that meets any preset heating condition from a plurality of candidate heat sources which are in a water-source heat pump mode to be a target heat source for performing defrosting includes:
determining whether a travel state of a vehicle meets a defrosting activation condition;
if the defrosting activation condition is not met, switching the heat source mode in which the thermal management system currently operates to the water-source heat pump mode, monitoring the travel state in real time, and re-executing the step of determining whether a travel state of a vehicle meets a defrosting activation condition; and
if the defrosting activation condition is met, executing the step of selecting a heat source that meets any preset heating condition from a plurality of candidate heat sources which are in a water-source heat pump mode to be a target heat source for performing defrosting.

In an embodiment of the present application, the travel state includes a vehicle speed, and/or a duration during which the vehicle remains within a preset speed range; and
the defrosting activation condition includes: the vehicle speed not exceeding a preset speed, and/or the duration during which the vehicle remains within the preset speed range exceeding a preset duration.

In an embodiment of the present application, after the switching the heat source mode in which the thermal management system currently operates to the water-source heat pump mode, the method further includes:
determining whether the ambient temperature at which the low-temperature radiator operates is within a preset temperature range in real time; and
if the ambient temperature at which the low-temperature radiator operates is within the preset temperature range, re-activating the air-source heat pump mode.

In an embodiment of the present application, the plurality of candidate heat sources include engine waste heat and compressor self-generated heat; the preset heating conditions include an engine waste heat recovery condition, and a condition in which the candidate heat source is compressor self-generated heat; and
the selecting a heat source that meets any preset heating condition from a plurality of candidate heat sources which are in a water-source heat pump mode to be a target heat source for performing defrosting includes:
determining whether an operating mode of a heater loop of the thermal management system is a heating mode;
if so, determining whether the engine waste heat meets the engine waste heat recovery condition;
if so, determining the engine waste heat to be the target heat source;
otherwise, determining the compressor self-generated heat to be the target heat source.

In an embodiment of the present application, the plurality of candidate heat sources include electric drive active heat and electric drive waste heat; the preset heating conditions include an electric drive waste heat recovery condition and an electric drive heating condition; and
the selecting a heat source that meets any preset heating condition from a plurality of candidate heat sources which are in a water-source heat pump mode to be a target heat source for performing defrosting includes:
if the operating mode of the heater loop is not the heating mode, determining whether the electric drive waste heat meets the electric drive waste heat recovery condition;
if so, determining the electric drive waste heat to be the target heat source;
otherwise, when the current ambient temperature and the remaining charge of a driving battery both meet the electric drive heating condition, determining the electric drive active heat to be the target heat source.

A defrosting control apparatus, based on the thermal management system as described in any of the above embodiments, includes:
a judgment module, configured to determine whether defrosting is required for the low-temperature radiator in the thermal management system;
a heat source selection module, configured to select a heat source that meets any preset heating condition from a plurality of candidate heat sources which are in a water-source heat pump mode to be a target heat source for performing defrosting if defrosting is required for the low-temperature radiator; and
a determination module configured to determine a defrosting loop based on a heat transfer path from the target heat source to the low-temperature radiator in the thermal management system.

In an embodiment of the present application, the judgment module is configured to:
if a heat source mode in which the thermal management system currently operates includes the air-source heat pump mode, acquire an ambient temperature and a coolant temperature at the inlet of the low-temperature radiator; and
according to the ambient temperature and the coolant temperature, determine whether defrosting is required for the low-temperature radiator.

In an embodiment of the present application, the heat source selection module is configured to:
determine whether a travel state of a vehicle meets a defrosting activation condition;
if the defrosting activation condition is not met, switch the heat source mode in which the thermal management system currently operates to the water-source heat pump mode, monitor the travel state in real time, and re-execute the step of determining whether a travel state of a vehicle meets a defrosting activation condition; and
if the defrosting activation condition is met, execute the step of selecting a heat source that meets any preset heating condition from a plurality of candidate heat sources which are in a water-source heat pump mode to be a target heat source for performing defrosting.

In an embodiment of the present application, the travel state includes a vehicle speed, and/or a duration during which the vehicle remains within a preset speed range; and
the defrosting activation condition includes: the vehicle speed not exceeding a preset speed, and/or the duration during which the vehicle remains within the preset speed range exceeding a preset duration.

In an embodiment of the present application, the heat source selection module is configured to:
determine whether the ambient temperature at which the low-temperature radiator operates is within a preset temperature range in real time; and
if the ambient temperature at which the low-temperature radiator operates is within the preset temperature range, re-activate the air-source heat pump mode.

In an embodiment of the present application, the plurality of candidate heat sources include engine waste heat and compressor self-generated heat; the preset heating conditions include an engine waste heat recovery condition and a condition in which the candidate heat source is compressor self-generated heat; and
the heat source selection module is configured to:
determine whether an operating mode of a heater loop of the thermal management system is a heating mode;
if so, determine whether the engine waste heat meets the engine waste heat recovery condition;
if so, determine the engine waste heat to be the target heat source;
otherwise, determine the compressor self-generated heat to be the target heat source.

In an embodiment of the present application, the plurality of candidate heat sources include electric drive active heat and electric drive waste heat; the preset heating conditions include an electric drive waste heat recovery condition and an electric drive heating condition; and
the heat source selection module described above is configured to:
if the operating mode of the heater loop is not the heating mode, determine whether the electric drive waste heat meets the electric drive waste heat recovery condition;
if so, determine the electric drive waste heat to be the target heat source;
otherwise, when the current ambient temperature and the remaining charge of a driving battery both meet the electric drive heating condition, determine the electric drive active heat to be the target heat source.

A vehicle includes the thermal management system as described in any of the above embodiments and the defrosting control apparatus as described in any of the above embodiments.

An electronic device includes a memory, a processor, and a computer program stored in the memory and executable on the processor, where the processor, when executing the computer program, implements the steps of the defrosting control method as described in the above embodiment.

A computer-readable storage medium, storing a computer program, where the program, when executed by a processor, implements the steps of the defrosting control method as described in the above embodiment.

In summary, in the present application, when defrosting is required for a low-temperature radiator, a target heat source capable of participating in defrosting is selected from a plurality of candidate heat sources of the thermal management system of the present application, and heat from the target heat source is transferred, by means of liquid-liquid heat exchange and/or heat transfer through coolant circulation, to the low-temperature radiator to perform defrosting. By utilizing a defrosting loop determined based on the target heat source, the heat from the target heat source is transferred, thereby enabling recycling of heat in different branches/loops of the thermal management system and reducing defrosting energy consumption.

Details of one or more embodiments of the present application are set forth in the following drawings and description, and other features and advantages of the present application will become apparent from the specification, drawings and claims.

### BRIEF DESCRIPTION OF THE DRAWINGS

To more clearly illustrate the technical solutions of the embodiments of the present application, the drawings to be used in the description of the embodiments of the present application will be briefly introduced below. Obviously, the drawings described below are only some embodiments of the present application. Those skilled in the art can also obtain other drawings based on these drawings without creative effort.
FIG. 1 is a structural schematic diagram of a coolant loop of a thermal management system according to an exemplary embodiment of the present application;
FIG. 2 is a structural schematic diagram of a refrigerant loop of a thermal management system according to an exemplary embodiment of the present application;
FIG. 3 is a structural schematic diagram of a coolant loop of a thermal management system according to another exemplary embodiment of the present application;
FIG. 4 is a flowchart illustrating a defrosting control method according to an exemplary embodiment of the present application;
FIG. 5 is a flowchart illustrating a defrosting control method according to another exemplary embodiment of the present application;
FIG. 6 is a flowchart illustrating a defrosting control method according to another exemplary embodiment of the present application;
FIG. 7 is a flowchart illustrating a defrosting control method according to another exemplary embodiment of the present application;
FIG. 8 is a flowchart illustrating a defrosting control method according to another exemplary embodiment of the present application;
FIG. 9 is a schematic block diagram of a defrosting control apparatus according to an exemplary embodiment of the present application;
FIG. 10 is a schematic block diagram of a vehicle according to an exemplary embodiment of the present application; and
FIG. 11 is a block diagram of an electronic device according to an exemplary embodiment of the present application.

### DETAILED DESCRIPTION

The technical solutions in the embodiments of the present application will be clearly and completely described below with reference to the accompanying drawings. Obviously, the described embodiments are some, but not all of the embodiments of the present application. The embodiments described with reference to the accompanying drawings are exemplary and intended to explain the present application, and should not be construed as limiting the present application. Based on the embodiments in the present application, all other embodiments obtained by those skilled in the art without creative effort are within the scope of protection of the present application.

It should be understood that, when used in the specification and appended claims of the present application, the term "comprising" indicates the presence of the described feature, integral, step, or operation, but does not exclude the presence or addition of one or more other features, integrals, steps, operations, and/or a collection thereof.

It should also be understood that the term "and/or" as used in the specification and appended claims of the present application means any combination of one or more of the associated listed items and all possible combinations, and includes such combinations.

As used in the specification of the present application and the appended claims, the term "if" may be interpreted, depending on the context, as "when", "once", "in response to determining", or "in response to detecting". Similarly, the phrases "if determined" or "if [the described condition or event] is detected" can be interpreted, depending on the context, as meaning "once determined" or "in response to determining" or "once [the described condition or event] is detected" or "in response to detecting [the described condition or event]".

Furthermore, in the specification of the present application and the appended claims, the terms "first", "second", "third", etc., are used only to distinguish descriptions and should not be construed as indicating or implying relative importance.

References to "one embodiment" or "some embodiments" as described in the specification of the present application mean that one or more embodiments of the present application include a particular feature, structure or characteristic described in conjunction with that embodiment. Therefore, the phrases "in one embodiment", "in some embodiments", "in other embodiments", "in still other embodiments", etc., appearing in different parts of this specification do not necessarily refer to the same embodiment, but rather mean "one or more, but not all, embodiments", unless otherwise specifically emphasized. The terms "including", "comprising", "having", and their variations all mean "including but not limited to", unless otherwise specifically emphasized.

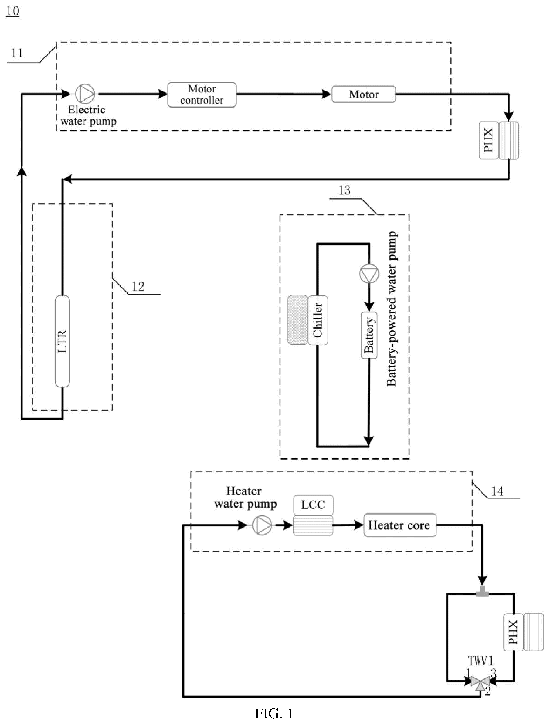

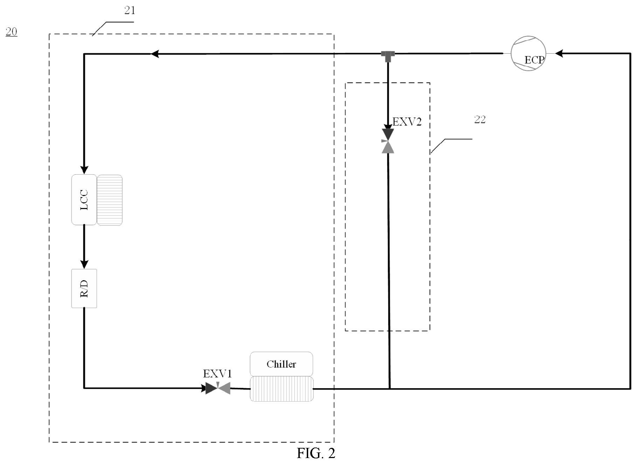

FIG. 1 is a structural schematic diagram of a coolant loop of a thermal management system according to an exemplary embodiment of the present application, and FIG. 2 is a structural schematic diagram of a refrigerant loop of a thermal management system according to an exemplary embodiment of the present application. As shown in FIGS. 1 to 2, the thermal management system 1 includes a coolant loop 10 and a refrigerant loop 20.

The refrigerant loop 20 may include, but is not limited to, a condenser LCC and a battery chiller which are provided therein.

The coolant loop 10 may include, but is not limited to, an electric water pump branch 11, a low-temperature heat dissipation branch 12 provided with a low-temperature radiator LTR, a battery cooling loop 13 provided with the battery chiller, a heater water pump branch 14 provided with the condenser LCC, and a heat exchanger PHX.

The radiator of the low-temperature heat dissipation branch in the present application can provide a heat dissipation function when participating in cooling, or can serve as a vapor-type heat exchanger to absorb heat from air to implement an air-source heat pump when participating in heating, so as to increase heat sources of the thermal management system and reduce power consumption of heating.

It should be noted that the above heat exchanger is a liquid-liquid heat exchanger or is referred to as an internal heat exchanger. Lines at two sides arranged inside the heat exchanger exchange heat by means of a temperature difference between media flowing through the lines. If a plate coaxial tube IHX or a plate heat exchanger PHX can be used as the above heat exchanger, in the present application, only the PHX is used as an exemplary description of the heat exchanger and is not a limitation on the heat exchanger.

In an embodiment of the present application, a first end of a line at one side of the heat exchanger PHX is in communication with a first end of the heater water pump branch 14, and a second end of the heater water pump branch is in communication with a second end of the line at one side of the heat exchanger PHX. That is, a coolant circulation loop is formed based on the heater water pump branch and the line at one side of the heat exchanger PHX. The heater water pump branch may include, but is not limited to, a heater water pump, a coolant side line of the condenser LCC, and a heater core. The heater water pump branch is configured to transfer heat released from the condenser into the coolant to the heater core to heat an occupant cabin. In the embodiment of the present application, the heater water pump branch is further configured to transfer heat released from the condenser LCC into the coolant to the line at one side of the heat exchanger PHX so as to exchange heat with the coolant in the line at the other side of the heat exchanger PHX.

In an embodiment of the present application, a first end of the electric water pump branch 11 is in communication with a first end of the line at the other side of the heat exchanger PHX, a second end of the line at the other side of the heat exchanger PHX is in communication with a first end of the low-temperature heat dissipation branch 12, and a second end of the low-temperature heat dissipation branch 12 is in communication with a second end of the electric water pump branch 11.

The electric water pump branch 11, the line at the other side of the heat exchanger PHX, and the low-temperature heat dissipation branch are communicated in sequence to form a coolant transfer loop. The electric water pump branch 11 may include, but is not limited to, an electric water pump and an electric drive device (such as a motor controller and a drive motor). The electric water pump branch 11 is configured to transfer heat generated during the operation of the electric drive device to other branches through coolant, or to absorb/release heat by driving the coolant to circulate to other branches by the electric water pump. For example, when the electric drive device does not generate heat, the electric water pump operates, to drive the coolant in the electric water pump branch to flow through the line at the other side of the heat exchanger PHX to absorb the heat in the line at one side of the heat exchanger PHX, and drive the coolant after absorbing heat to flow to the low-temperature heat dissipation branch. In this way, heat in the heater water pump branch is transferred to the low-temperature radiator of the low-temperature heat dissipation branch, and the low-temperature radiator is heated using the transferred heat to achieve a defrosting effect.

In the present application, heat can be transferred to the low-temperature heat dissipation branch in the following two manners:
First manner: when there is defrosting heat in the coolant in the electric water pump branch, defrosting can be performed using heat in the electric water pump branch; in this case, the electric water pump branch can be in communication with the low-temperature heat dissipation branch.

Second manner: when there is no defrosting heat in the coolant in the electric water pump branch, or when defrosting is not performed using the heat in the electric water pump branch, heat in the coolant in the heater water pump branch can be exchanged, by a heat exchanger, into the coolant in the line at the other side of the heat exchanger, the electric water pump branch, the line of the heat exchanger and the low-temperature heat dissipation branch can be communicated, and the coolant can be circulated among the three by the electric water pump of the electric water pump branch. The heat in the coolant in the heater water pump branch may be engine waste heat or heat absorbed from the refrigerant side using the condenser LCC.

In the thermal management system proposed in the present application, the heat exchanger that absorbs heat from air in the air-source heat pump mode is provided in the coolant loop, that is, the low-temperature radiator provided in the low-temperature heat dissipation branch, and the evaporator that exchanges heat with the air in the refrigerant loop is replaced by the battery chiller for liquid-liquid heat exchange. In this way, the device susceptible to frost formation is transferred from the refrigerant loop to the coolant loop. By setting interconnected structure relationships among the heat exchanger, the heater water pump branch, the refrigerant loop, the low-temperature heat dissipation branch, and the engine waste heat branch, heat transfer paths among the heater water pump branch, the engine waste heat branch, the electric water pump branch, and the low-temperature heat dissipation branch are realized, thereby providing a plurality of selectable heat sources for defrosting the low-temperature radiator, so as to determine a defrosting loop with the lowest power consumption in conjunction with the plurality of heat sources.

Based on the above embodiment, the condenser LCC and battery chiller in the refrigerant loop 20 are provided in a heat pump branch 21. The refrigerant loop 20 may also include, but is not limited to, a compressor ECP and a hot-gas bypass branch 22.

The hot-gas bypass branch 22 and heat pump branch 21 are connected in parallel to both ends of the compressor ECP respectively. The hot-gas bypass branch is configured to depressurize the high-temperature and high-pressure gas flowing through the branch, which flows back to the compressor after being depressurized and is re-compressed by the compressor. Thus, a portion of the electrical energy consumed by the compressor can be converted into self-generated heat, while another portion of the electrical energy can be used to compress the refrigerant to achieve a heat pump effect. The gas flowing out of the compressor outlet again is shunted by means of the heat pump branch and the hot-gas bypass branch, and the heat from the refrigerant side is transferred to the coolant side through heat release by the heat pump branch.

In some embodiments, the heat pump branch may include, but is not limited to, a condenser LCC, a battery chiller, and an electronic expansion valve EXV1. The heat pump branch is configured to release the heat absorbed by the battery chiller through the condenser, thereby realizing the transfer of heat between different loops/branches at the coolant side. The electronic expansion valve is configured for throttling and pressure reduction. The superheat at the compressor inlet is maintained by adjusting the opening degree of the electronic expansion valve EXV1. In addition, the condenser LCC may be a condenser coming with a liquid storage tank. If the condenser does not include a liquid storage tank, a liquid storage dryer R/D may be provided at the outlet of the condenser LCC.

Optionally, the hot-gas bypass branch may include, but is not limited to, an electronic expansion valve EXV2. The flow rate of refrigerant shunted to the hot-gas bypass branch can be adjusted by adjusting the opening degree of the electronic expansion valve EXV2. The refrigerant in this branch is depressurized by the EXV2, and then is mixed with the refrigerant flowing out from the battery chiller at the compressor inlet, to adjust the temperature of the mixed gas at the compressor inlet, ensure superheat, avoid liquid slugging in the compressor, and regulate the amount of self-generated heat achievable by the compressor. The flow rate of the refrigerant in the hot-gas bypass branch can by precisely regulated by the electronic expansion valve EXV2, thereby accurately controlling the self-generated heat generated by the compressor as needed and avoiding energy waste.

In addition, a combination of a hot-gas expansion valve and a shut-off valve can be used to replace the electronic expansion valve EXV2 to achieve the effect of throttling and pressure reduction.

As a possible implementation, the coolant loop may also include a proportional three-way valve TWV1 and a coolant bypass branch. The coolant bypass branch, the heater water pump branch, and the line at one side of the heat exchanger are connected in parallel. The proportional three-way valve TWV1 is provided at any convergence point of the three paths among the coolant bypass branch, the heater water pump branch, and the line at one side of the heat exchanger. Three ports converged at the convergence point are communicated by using three ends of the proportional three-way valve TWV1. As shown in FIG. 1, for example, a first end of the coolant bypass branch is in communication with a first end of the proportional three-way valve TWV1, a first end of the heater water pump branch is in communication with a second end of the proportional three-way valve TWV1, and a first end of the line at one side of the heat exchanger PHX is in communication with a third end of the proportional three-way valve TWV1.

A second end of the coolant bypass branch and a second end of the line at one side of the heat exchanger PHX are simultaneously in communication with a second end of the heater water pump branch.

The proportional three-way valve TWV1 controls the coolant flowing out from the heater water pump branch to flow to the coolant bypass branch through the first end of TWV1, and flow to the line at one side of the heat exchanger PHX through the third end of TWV1, achieving shunting of the coolant in the heater water pump branch circuit. The heater water pump branch and the coolant bypass branch form a heater loop for heating the occupant cabin, and the heater water pump branch and the line at one side of the heat exchanger PHX form a defrosting heat transfer loop.

The flow rate shunted to the coolant bypass branch and the flow rate shunted to the line at one side of the heat exchanger PHX can be adjusted by the proportional three-way valve, thereby adjusting the defrosting heat transferred from the heater water pump branch. By adjusting a valve state of the proportional three-way valve, the defrosting heat transfer loop or the heater loop can be turned off, or the defrosting heat transfer loop and the heater loop can be turned on simultaneously, to transfer defrosting heat while heating the occupant cabin.

In the present application, the heater water pump branch is connected to both the heater loop and the defrosting heat transfer loop by providing the proportional three-way valve at the first end or second end of the heater water pump branch, thereby utilizing the heat in the coolant in the heater water pump branch to heat the occupant cabin and/or defrost the low-temperature radiator. Meanwhile, the ratio of the opening degree of each valve of the proportional three-way valve can be adjusted according to defrosting needs, thereby adjusting the defrosting heat supplied to the low-temperature radiator and avoiding heat waste. In some embodiments, when there is electric drive waste heat for performing defrosting, the communication between the second end and the third end of the proportional three-way valve can be cut off, so that the heat from the heater water pump branch is no longer transferred to the low-temperature heat dissipation branch.

As another feasible implementation, the line at the other side of the heat exchanger PHX is connected in series between the electric water pump branch and the low-temperature heat dissipation branch by using a four-way valve FWV1. When defrosting the low-temperature heat dissipation radiator, whether the line at the other side of the heat exchanger PHX is connected between the electric water pump branch and the low-temperature heat dissipation branch can by controlled by adjusting the communication/closure among all valves of the four-way valve FWV1. For example, if defrosting is required by using heat exchanged from other loops by the heat exchanger, the electric water pump branch, the line at the other side of the heat exchanger, and the low-temperature heat dissipation branch are communicated in sequence. If defrosting is performed using only the electric drive waste heat, the electric water pump branch is in communication with the low-temperature heat dissipation branch.

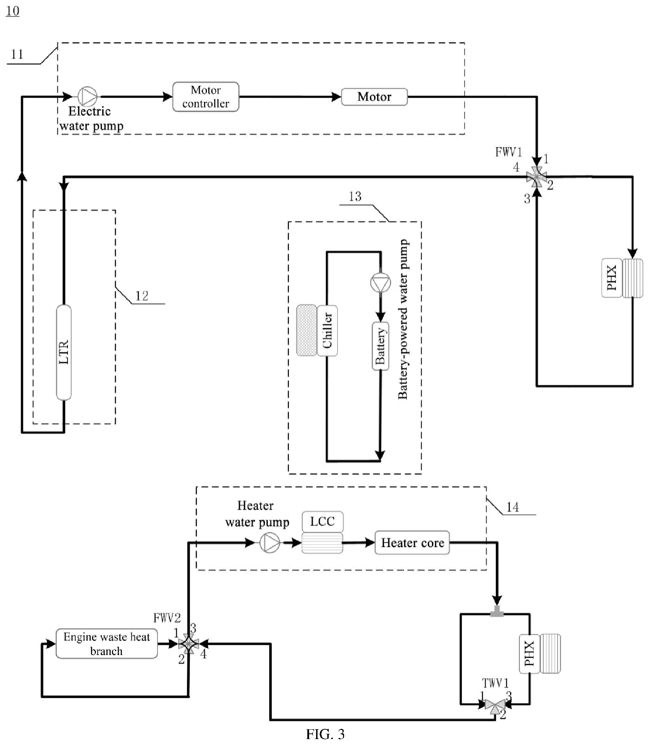

As another feasible implementation, as shown in FIG. 3, the above-mentioned coolant bypass branch and proportional three-way valve TWV1 can be provided while providing the four-way valve FWV1. It should be noted that the first end and the second end mentioned in the embodiment of the present application can be respectively: different ports in the inlets and outlets of branches/lines.

As shown in FIG. 3, an outlet of the electric water pump branch is in communication with a first end of the four-way valve FWV1, a second end of the four-way valve FWV1 is in communication with an inlet of the line at the other side of the heat exchanger PHX, a third end of the four-way valve FWV1 is in communication with an outlet of the line at the other side of the heat exchanger PHX, a fourth end of the four-way valve FWV1 is in communication with an inlet of the low-temperature heat dissipation branch, and an outlet of the low-temperature heat dissipation branch is in communication with an inlet of the electric water pump branch.

As shown in FIG. 3, the proportional three-way valve TWV1 is provided at the inlet of the heater water pump branch.

In addition, the present application may also include an engine waste heat branch and a four-way valve FWV2, where an outlet of the engine waste heat branch may be an engine coolant outlet, and an inlet of the engine waste heat branch may be a coolant inlet in front of a thermostat.

The outlet of the engine waste heat branch is in communication with a first end of the four-way valve FWV2, the inlet of the engine waste heat branch is in communication with a second end of the four-way valve FWV2, a third end of the four-way valve FWV2 is in communication with an inlet of a heater pump in the heater water pump branch, and a fourth end of the four-way valve FWV2 is in communication with the second end of the proportional three-way valve TWV1. In this way, the engine waste heat is transferred to the heater water pump branch, thereby providing heat for heating the occupant cabin and/or defrosting the low-temperature radiator.

In the thermal management system of the present application, a battery chiller for liquid-liquid heat exchange is used as a heat absorption apparatus in the refrigerant loop, and an air-source heat exchanger susceptible to frost formation is provided in the coolant loop. Then, the engine waste heat is introduced into the heater water pump branch through the four-way valve, or the heat in the refrigerant loop is absorbed by the condenser provided in the heater water pump branch, and then the heat in the heater water pump branch is transferred to the low-temperature radiator through the heat exchanger. In addition, defrosting by a plurality of heat sources, such as electric drive waste heat, heat generated due to electric drive stalling, or heat generated in electric drive inefficient mode, is achieved by communicating the electric water pump branch with the low-temperature heat dissipation branch. The thermal management system of the present application realizes heat exchange between different branches/loops and realizes recycling of heat, providing a plurality of selectable heat sources for the low-temperature radiator and achieving the effect of low energy consumption defrosting.

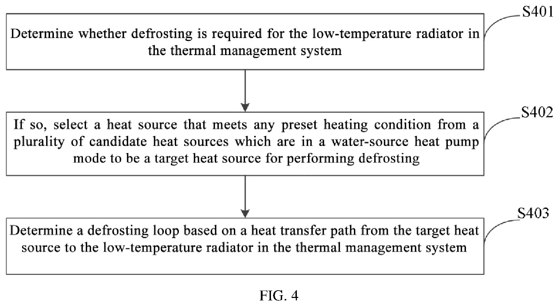

FIG. 4 is a flowchart illustrating a defrosting control method according to an exemplary embodiment of the present application. The defrosting control method proposed in the present application can be based on the thermal management system described in any of the above embodiments, to provide a plurality of selectable heat sources for defrosting a low-temperature radiator, thereby achieving low energy consumption defrosting. As shown in FIG. 4, the method includes the following steps:
S401, determining whether defrosting is required for the low-temperature radiator in the thermal management system.

In an embodiment of the present application, in the thermal management system, an air-source heat exchanger is arranged in the coolant loop, such as an arranged low-temperature radiator (LTR). The low-temperature radiator can perform heat exchange between coolant and air, which can be used as a radiator when the thermal management system needs to dissipate heat, and can be used as an air-source heat absorption apparatus (such as an evaporator) when the thermal management system needs to absorb heat.

The low-temperature radiator is at risk of frosting when absorbing heat from air, which will affect the heat exchange efficiency.

Whether defrosting is required for the low-temperature radiator may be determined by judging whether the low-temperature radiator is frosted.

S402, if defrosting is required for the low-temperature radiator, selecting a heat source that meets any preset heating condition from a plurality of candidate heat sources which are in a water-source heat pump mode to be a target heat source for performing defrosting.

In the present application, the mode of acquiring air-source heat by the thermal management system by using the low-temperature radiator is expressed as an air-source heat pump mode.

Compared with the air-source heat pump mode that uses the heat exchange between coolant and air, the present application has the advantage that the mode of transferring heat by means of liquid-liquid heat exchange and heat exchange through coolant circulation is expressed as the water-source heat pump mode. In the thermal management system, any device that can generate heat during operation can be used as a candidate heat source. According to the current operating condition of the thermal management system, it can be determined whether each candidate heat source can meet any preset heating condition, and the heat source that meets any preset heating condition can be used to be the target heat source for performing defrosting.

S403, determining a defrosting loop based on a heat transfer path from the target heat source to the low-temperature radiator in the thermal management system.

After determining the target heat source, the heat transfer path from the target heat source to the low-temperature radiator can be determined based on the structure of the thermal management system of the present application. Then, a communication valve or water pump and other related devices that need to be controlled are determined. By adjusting the opening/closing of different valves of the communication valve, the defrosting loop capable of transferring heat from the target heat source to the low-temperature radiator can be turned on.

Furthermore, when there are a plurality of target heat sources, a target heat source that does not affect a current task of the thermal management system and a heat transfer path based on the target heat source can be selected in conjunction with the defrosting heat preset for the low-temperature radiator, the current operating condition of the thermal management system, and the heat transfer paths from these target heat sources to the low-temperature radiator.

In summary, in the defrosting control method proposed in the present application, when defrosting is required for a low-temperature radiator, a target heat source capable of participating in defrosting is selected from a plurality of candidate heat sources of the thermal management system of the present application, and heat from the target heat source is transferred, by means of liquid-liquid heat exchange and/or heat transfer through coolant circulation, to the low-temperature radiator to perform defrosting. By utilizing a defrosting loop determined based on the target heat source, the heat from the target heat source is transferred, thereby enabling recycling of heat in different branches/loops of the thermal management system and reducing defrosting energy consumption.

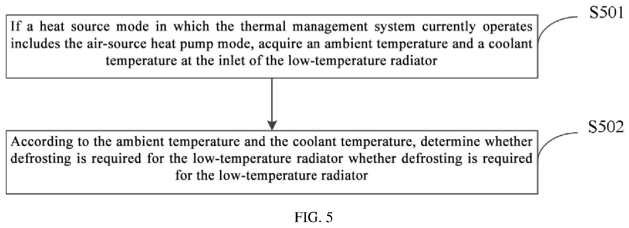

Based on the above embodiment, as shown in FIG. 5, step S101 "determining whether defrosting needs to be performed the low-temperature radiator of the thermal management system" may include the following steps:
S501, if a heat source mode in which the thermal management system currently operates includes the air-source heat pump mode, acquiring an ambient temperature and a coolant temperature at the inlet of the low-temperature radiator.

When the low-temperature radiator is used as a heat absorption apparatus, the gas at the air side undergoes a phase change after dissipating heat, which may cause frost to form on the surface of the low-temperature radiator, thus affecting the heat exchange effect. In the present application, when the thermal management system is in the air-source heat pump mode, the ambient temperature and the coolant temperature at the inlet of the low-temperature radiator can be acquired via a temperature collection apparatus.

S502, according to the ambient temperature and the coolant temperature, determining whether defrosting is required for the low-temperature radiator.

By acquiring the coolant temperature at the inlet of the low-temperature radiator, a temperature of the coolant in the low-temperature radiator before exchanging heat with the ambient air can be determined.

Optionally, the minimum temperature limit for frost formation on the surface of the low-temperature radiator can be set according to the frost point of air. For example, if the frost point of air is 0°C, a temperature threshold of the coolant in the low-temperature radiator before heat exchange can be set based on 0°C as the minimum temperature limit for frost formation on the surface of the low-temperature radiator, for example, can be set to - 0.5°C. That is, if the temperature of the coolant in the low-temperature radiator is less than -0.5°C before heat exchange, it is considered that the surface temperature of the low-temperature radiator reaches the frost point of air, so after the coolant exchanges heat with the air, the gas coming into contact with the surface of the low-temperature radiator may undergo a phase change and frost may form on the surface of the low-temperature radiator. Correspondingly, when the coolant temperature at the inlet of the low-temperature radiator is greater than or equal to -0.5°C, the surface temperature of the low-temperature radiator does not reach the frost point of air, so it is difficult for frost to form on the surface of the low-temperature radiator. Therefore, the coolant temperature threshold at the inlet of the low-temperature radiator can be set to -0.5°C. When the coolant temperature at the inlet of the low-temperature radiator is greater than or equal to the aforementioned coolant temperature threshold, it is considered that there is no need to perform defrosting on the low-temperature radiator. However, when the coolant temperature at the inlet of the low-temperature radiator is less than the aforementioned coolant temperature threshold, it is considered that the low-temperature radiator may be prone to frosting.

In addition, to accurately determine the results, when the coolant temperature at the inlet of the low-temperature radiator is less than the aforementioned coolant temperature threshold (e.g., -0.5°C), the following process can be further added: determining a temperature difference between the ambient temperature and the coolant temperature at the inlet of the low-temperature radiator.

Optionally, if the difference between the ambient temperature T and the coolant temperature T1 at the inlet of the low-temperature radiator is greater than or equal to a preset temperature difference threshold (e.g., T-T1≥5), it is confirmed that defrosting is required for the low-temperature radiator. If the difference between the ambient temperature T and the coolant temperature T1 at the inlet of the low-temperature radiator is less than the preset temperature difference threshold, it is confirmed that there is no need to perform defrosting on the low-temperature radiator. The temperature difference threshold can be set according to the heat exchange efficiency of the low-temperature radiator of the current thermal management system. Alternatively, if the coolant temperature at the inlet of the low-temperature radiator is less than the coolant temperature threshold, the heat exchange process between different ambient temperatures and different coolant temperatures is tested for frost formation, thereby determining the aforementioned temperature difference threshold. For example, when the coolant temperature at the inlet of the low-temperature radiator is less than -0.5°C, if the difference between the ambient temperature and the coolant temperature at the inlet of the low-temperature radiator is greater than or equal to 5°C, it is considered that after exchanging heat with the coolant, the air undergoes a phase change and condenses into frost on the surface of the low-temperature radiator, and it is confirmed that defrosting is required for the low-temperature radiator. If the coolant temperature at the inlet of the low-temperature radiator is greater than or equal to -0.5°C, or if the coolant temperature at the inlet of the low-temperature radiator is less than -0.5°C and the difference between the ambient temperature and the coolant temperature at the inlet of the low-temperature radiator is less than 5°C, it is confirmed that there is no need to perform defrosting on the low-temperature radiator.

It should be noted that the above-mentioned coolant temperature threshold can be set according to the frost point of air and the error range required currently by the low-temperature radiator of the thermal management system, for example, a temperature difference of ±0.5°C can be set, or a temperature difference of ±0.3°C can be set, which will not be limited in the present application

In practice, in addition to the above-mentioned implementations, temperature/humidity sensors can also be arranged on the air-side surface of the low-temperature radiator to determine whether frost is formed.

In an embodiment of the present application, when the thermal management system is in the air-source heat pump mode that uses a low-temperature radiator to absorb heat, it is predicted whether frost formation occurs on the low-temperature radiator based on the ambient temperature and the coolant temperature at the inlet of the low-temperature radiator, and then it is determined whether defrosting is required for the low-temperature radiator. By limiting the coolant temperature at the inlet of the low-temperature radiator, and by limiting the difference between the ambient temperature and the coolant temperature at the inlet of the low-temperature radiator, it is predicted whether the current temperature condition reaches a condition where air undergoes a phase change and condenses into frost on the surface of the low-temperature radiator, thereby enhancing the accuracy of judging frost formation on the low-temperature radiator.

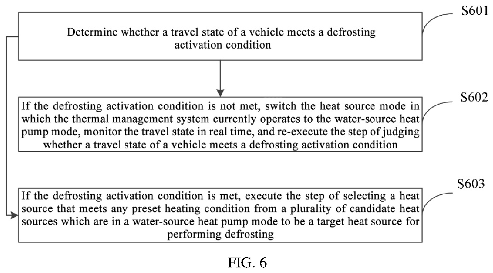

Based on the above embodiment, as shown in FIG. 6, step S102 "selecting a heat source that meets any preset heating condition from a plurality of candidate heat sources which are in a water-source heat pump mode to be a target heat source for performing defrosting" may include the following steps:
S601, determining whether a travel state of a vehicle meets a defrosting activation condition.
S602, if the defrosting activation condition is not met, switching the heat source mode in which the thermal management system currently operates to the water-source heat pump mode, monitoring the travel state in real time, and re-executing the step of determining whether a travel state of a vehicle meets a defrosting activation condition.
S603, if the defrosting activation condition is met, executing the step of selecting a heat source that meets any preset heating condition from a plurality of candidate heat sources which are in a water-source heat pump mode to be a target heat source for performing defrosting.

In practice, the low-temperature radiator, as a device that exchanges heat with air, may be arranged at the ventilation position at the front of the vehicle, the oncoming wind speed may be estimated based on the travel state of the vehicle, and the defrosting effect may be affected at a high oncoming wind speed.

The above-mentioned defrosting activation condition may include a preset travel state. When the travel state of the vehicle reaches the preset travel state, defrosting of the low-temperature radiator is activated. When the travel state of vehicle does not reach the preset travel state, the defrosting of the low-temperature radiator is not activated.

When it is confirmed that defrosting is required for the low-temperature radiator, if defrosting is not activated because the current travel state does not meet the defrosting activation condition, the heat source mode currently selected by the thermal management system can be switched to the water-source heat pump mode. For example, when only an air-source heat pump is used for heating, the heat source mode can be directly switched from the air-source heat pump mode to the water-source heat pump mode. When the air-source heat pump and a water-source heat pump are simultaneously used for heating at present, the current heat source mode is adjusted to the water-source heat pump mode that only uses the water-source heat pump for heating, so as to avoid aggravating the frosting of the low-temperature radiator and reduce the impact of the frosting of the low-temperature radiator on vehicle heating.

In addition to switching the heat source mode, the present application also monitors the travel state of the vehicle in real time, and re-determines whether a current travel state meets the defrosting activation condition after monitoring the current travel state of the vehicle.

When the travel state of the vehicle meets the defrosting activation condition, the defrosting of the low-temperature radiator is activated, that is, step S102 "selecting a heat source that meets any preset heating condition from a plurality of candidate heat sources which are in a water-source heat pump mode to be a target heat source for performing defrosting" is continued.

In an embodiment of the present application, after determining that defrosting is required, before determining to perform defrosting using the target heat source, a judgment is made on the travel state of the vehicle. If the current travel state of the vehicle makes the low-temperature radiator susceptible to high oncoming wind speed, to ensure the defrosting effect, defrosting of the low-temperature radiator is not activated. However, in order to avoid aggravating the frost formation on the low-temperature radiator and to avoid affecting the heating of the vehicle, in the present application, the current air-source heat pump mode is turned off, the water-source heat pump mode is taken as the current heat source mode of the thermal management system, and defrosting of the low-temperature radiator is activated when the travel state of the vehicle meets the defrosting activation condition. The present application ensures defrosting efficiency, avoids waste of defrosting heat, and reduces the impact of low-temperature radiator frosting and defrosting on vehicle heating in this way.

Based on the above embodiment, the travel state may include a vehicle speed, and/or a duration during which the vehicle remains within a preset speed range; and the corresponding defrosting activation condition may include, but is not limited to, the vehicle speed does exceeding a preset speed, and/or the duration during which the vehicle remains within the preset speed range exceeding a preset duration.

For example, the preset vehicle speed can be set to 10 km/h, the corresponding preset vehicle speed range can be set to vehicle speed V≦10 km/h, and the preset duration can be set to 3 minutes.

The present application avoids the impact of large changes in vehicle speed within a short period of time (for example, when a user accelerates and then decelerates, or briefly decelerates and then accelerates again when passing through a traffic light intersection) on the judgment process corresponding to the defrosting activation condition by setting the preset duration.

In the present application, if the vehicle speed is ≤10 km/h and the duration for keeping vehicle speed ≤10 km/h is greater than or equal to 3 minutes, it is considered that the current travel state meets the defrosting activation condition. Otherwise, it is considered that the current travel state does not meet the defrosting activation condition.

It should be noted that the preset speed and preset duration can be set as needed, and the specific values are not limited in the present application.

In an embodiment of the present application, the preset vehicle speed and preset duration which are set are utilized to screen out a travel state with relatively stable vehicle speed and no large oncoming wind. In this travel state, defrosting of the low-temperature radiator is activated to ensure the defrosting effect. The present application improves the accuracy of conditional screening for vehicle speed by limiting the preset duration.

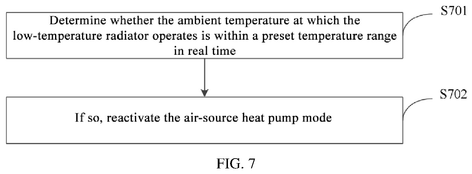

Based on the above embodiment, as shown in FIG. 7, after step S602 "switching the heat source mode in which the thermal management system currently operates to the water-source heat pump mode", upon completion of defrosting of the low-temperature radiator, the defrosting control method may further include the following steps:
S701, determining whether the ambient temperature at which the low-temperature radiator operates is within a preset temperature range in real time.

When the air-source heat pump mode is turned off and the water-source heat pump mode is taken as the heat source mode of the thermal management system, the ambient temperature at which the low-temperature radiator operates is acquired in real time, and after acquiring the current ambient temperature, it is determined whether the current ambient temperature is within the preset temperature range.

The preset temperature range is an ambient temperature range preset for the normal heat exchange process of the low-temperature radiator in the air-source heat pump mode, which can be set as needed, and will not be limited in the present application. For example, the preset temperature range is set to [10°C, -10°C].

S702, if the ambient temperature at which the low-temperature radiator operates is within the preset temperature range, re-activating the air-source heat pump mode.

If the ambient temperature at which the low-temperature radiator operates is within the preset temperature range, it can be considered that the defrosted low-temperature radiator can absorb heat from the air at the current ambient temperature and be used as an air-source heat exchanger. Therefore, the air-source heat pump mode is reactivated to increase heat sources of the thermal management system and reduce the electrical energy consumed by heating.

In an embodiment of the present application, when defrosting of the low-temperature radiator is completed and the current ambient temperature meets the operating temperature of the low-temperature radiator as an air-source heat exchanger, the low-temperature radiator is restarted to increase the heat sources of the thermal management system and reduce the electrical energy consumed by heating.

Based on the above embodiment, the plurality of candidate heat sources may include, but are not limited to, engine waste heat and compressor self-generated heat; and the preset heating conditions may include, but are not limited to, an engine waste heat recovery condition and a condition in which the candidate heat source is compressor self-generated heat.

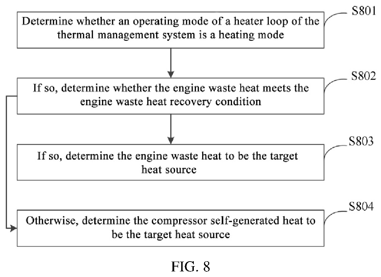

Correspondingly, as shown in FIG. 8, step S102 "selecting a heat source that meets any preset heating condition from a plurality of candidate heat sources which are in a water-source heat pump mode to be a target heat source for performing defrosting" may include the following steps:
S801, determining whether an operating mode of a heater loop of the thermal management system is a heating mode.

The operating mode of the heater loop may be a heating mode or a non-heating mode. The non-heating mode may include, but is not limited to, a cooling mode.

A control unit can determine whether the heater loop is in the heating mode by determining whether an air conditioner in the occupant cabin is in the heating mode, or determine whether the heater loop is in the heating mode by monitoring a state of a damper in a heater core of the heater loop.

S802, if so, determining whether the engine waste heat meets the engine waste heat recovery condition.

When the heater loop is in the heating mode, it is necessary to further determine whether the engine waste heat meets the engine waste heat recovery condition.

For example, the engine waste heat recovery condition can be set to a condition where the coolant temperature at the engine outlet exceeds a preset defrosting temperature. That is, when the engine waste heat meets the engine waste heat recovery condition, it can be considered that there is engine waste heat that can be transferred to the low-temperature radiator to complete defrosting.

For another example, the engine waste heat recovery condition can also be set to a condition where an engine is in an operating state and the coolant temperature at the engine outlet is greater than or equal to a temperature threshold. This temperature threshold can be set based on the heat loss during the process of heat transfer from the engine waste heat branch to the low-temperature radiator. That is, when the engine waste heat meets the engine waste heat recovery condition, it can be considered that there is engine waste heat that can be transferred to the low-temperature radiator to participate in defrosting. For example, the heat recovery condition can be set to a condition where the engine is in an operating state and the engine cylinder head outlet coolant temperature is greater than or equal to 60°C.

It should be noted that the specific values of the above-mentioned preset defrosting temperature and the above-mentioned temperature threshold can be set as needed, which will not be limited in the present application.

S803, if so, determining the engine waste heat to be the target heat source.

S804, otherwise, determining the compressor self-generated heat to be the target heat source.

If the current engine waste heat meets the engine waste heat recovery condition, the engine waste heat is determined to be the target heat source for performing defrosting on the low-temperature radiator. If the current engine waste heat does not meet the engine waste heat recovery condition, the refrigerant loop is controlled to generate compressor self-generated heat, which is then used to be the target heat source.

Based on the thermal management system structure described in the above embodiment, it is known that in the present application, the engine waste heat and the heat generated by the refrigerant loop need to be transferred to the low-temperature radiator through the heater water pump branch and the line at the other side of the heat exchanger PHX. Therefore, when the heater loop is in the heating mode, the heater water pump branch is used to transfer heat for heating the occupant cabin. Under this working condition, using the heater water pump branch to transfer defrosting heat will not affect the heating of the occupant cabin.

In the present application, power consumed during defrosting is saved by recycling engine waste heat, and when the engine waste heat cannot provide enough heat for defrosting, the compressor self-generated heat is activated, ensuring the heat required by the low-temperature radiator. In addition, when it is necessary to use the heater water pump branch to transfer defrosting heat, the heater loop is judged first, and then the availability of heat sources of which the heat needs to be transferred to the low-temperature radiator by means of the heater water pump branch is judged if the heater loop is in the heating mode. If the heater loop is not in the heating mode, it is not necessary to judge these heat sources. Therefore, defrosting is achieved without affecting the heating needs of the occupant cabin.

Optionally, when the operating mode of the heater loop is not the heating mode, it is further determined whether the electric drive waste heat meets the electric drive waste heat recovery condition; if so, the electric drive waste is determined to be the target heat source; otherwise, when the current ambient temperature and the remaining charge of a driving battery both meet the electric drive heating condition, the electric drive active heat is determined to be the target heat source. Therefore, when the heater loop is not in the heating mode, defrosting is performed using the heat from the electric water pump branch (such as electric drive waste heat/electric drive active heat), and defrosting heat is not transferred using the heater water pump branch in the heater loop any longer, so defrosting can be achieved without affecting the current operating mode of the air conditioner of the occupant cabin.

Optionally, before determining the operating mode of the heater loop, it is preferentially determined whether there is available electric drive waste heat, if so, defrosting is performed using the electric drive waste heat, otherwise, the step of determining the operating mode of the heater loop is continued. If the heater loop is operating in the heating mode, the step of selecting the target heat source from the engine waste heat and the compressor self-generated heat is continued. If the heater loop is not in the heating mode, the above-mentioned process for determining the electric drive active heat is executed.

The electric drive active heat may include heat energy converted from electric energy, which is obtained by controlling the drive motor to stall or control the drive motor to operate inefficiently.

Based on the above embodiment, the defrosting loop may be determined in the following manners:
First manner: if the target heat source is the engine waste heat, the engine waste heat branch is connected in series to the heater loop, and the heater water pump branch in the heater loop is communicated the line at one side of the heat exchanger, to transfer the engine waste heat to the line at one side of the heat exchanger; and the low-temperature heat dissipation branch, the electrically driven water pump branch, and the line at the other side of the heat exchanger are communicated in sequence, to absorb the engine waste heat from the line at one side of the heat exchanger and transfer the engine waste heat to the low-temperature heat dissipation branch.

Second manner: if the target heat source is the electric drive active heat or electric drive waste heat, the low-temperature heat dissipation branch and the electric water pump branch are communicated, to transfer the electric drive active heat or the electric drive waste heat to the low-temperature heat dissipation branch.

Third manner: if the target heat source is the compressor self-generated heat, the hot-gas bypass branch and water pump branch of the refrigerant loop are connected, and the heater water pump branch and the line at one side of the heat exchanger are communicated, to transfer the compressor self-generated heat from the refrigerant loop to the line at one side of the heat exchanger; and the low-temperature heat dissipation branch, the electrically driven water pump branch and the line at the other side of the heat exchanger are communicated in sequence to absorb the compressor self-generated heat from the line at one side of the heat exchanger and transfer the compressor self-generated heat to the low-temperature heat dissipation branch.

In summary, in the present application, the heat exchanger that absorbs heat from air is arranged at the coolant side and defrosting is performed using the heat in different branches/loops at the coolant side, eliminating the need for an auxiliary PTC of the outdoor heat exchanger for heating and defrosting, reducing costs and reducing energy consumption. In the present application, in conjunction with the current operating mode of the air conditioner of the occupant cabin, i.e. the current operating mode of the heater loop, a defrosting loop that does not affect the operating mode is selected to transfer defrosting heat, thereby avoiding the impact of the defrosting process on the comfort of the occupant cabin.

It should be understood that the sequence number of each step in the above embodiments does not imply the order of execution. The execution order of each process should be determined by its function and internal logic, and should not constitute any limitation on the implementation process of the embodiments of the present application.

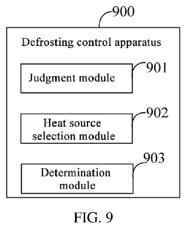

FIG. 9 is a block diagram of a defrosting control apparatus according to an exemplary embodiment of the present application. As shown in FIG. 9, the apparatus 900 includes a judgment module 901, a heat source selection module 902, and a determination module 903.

The judgment module 901 is configured to determine whether defrosting is required for the low-temperature radiator in the thermal management system.

The heat source selection module 902 is configured to select a heat source that meets any preset heating condition from a plurality of candidate heat sources which are in a water-source heat pump mode to be a target heat source for performing defrosting if defrosting is required for the low-temperature radiator.

The determination module 903 is configured to determine a defrosting loop based on a heat transfer path from the target heat source to the low-temperature radiator in the thermal management system.

In an embodiment of the present application, the judgment module is configured to:
if a heat source mode in which the thermal management system currently operates includes the air-source heat pump mode, acquire an ambient temperature and a coolant temperature at the inlet of the low-temperature radiator; and
according to the ambient temperature and the coolant temperature, determine whether defrosting is required for the low-temperature radiator.

In an embodiment of the present application, the heat source selection module is configured to:
determine whether a travel state of a vehicle meets a defrosting activation condition;
if the defrosting activation condition is not met, switch the heat source mode in which the thermal management system currently operates to the water-source heat pump mode, monitor the travel state in real time, and re-execute the step of determining whether a travel state of a vehicle meets a defrosting activation condition; and
if the defrosting activation condition is met, execute the step of selecting a heat source that meets any preset heating condition from a plurality of candidate heat sources which are in a water-source heat pump mode to be a target heat source for performing defrosting.

In an embodiment of the present application, the travel state includes a vehicle speed, and/or a duration during which the vehicle remains within a preset speed range; and
the defrosting activation condition includes: the vehicle speed not exceeding a preset speed, and/or the duration during which the vehicle remains within the preset speed range exceeding a preset duration.

In an embodiment of the present application, the heat source selection module is configured to:
determine whether the ambient temperature at which the low-temperature radiator operates is within a preset temperature range in real time; and
if the ambient temperature at which the low-temperature radiator operates is within the preset temperature range, re-activate the air-source heat pump mode.

In an embodiment of the present application, the plurality of candidate heat sources include engine waste heat and compressor self-generated heat; the preset heating conditions include an engine waste heat recovery condition and a condition in which the candidate heat source is compressor self-generated heat; and
the heat source selection module is configured to:
determine whether an operating mode of a heater loop of the thermal management system is a heating mode;
if so, determine whether the engine waste heat meets the engine waste heat recovery condition;
if so, determine the engine waste heat to be the target heat source;
otherwise, determine the compressor self-generated heat to be the target heat source.

In an embodiment of the present application, the plurality of candidate heat sources include electric drive active heat and electric drive waste heat; the preset heating conditions include an electric drive waste heat recovery conditions and an electric drive heating condition; and
the heat source selection module is configured to:
if the operating mode of the heater loop is not the heating mode, determine whether the electric drive waste heat meets the electric drive waste heat recovery condition;
if so, determine the electric drive waste heat to be the target heat source;
otherwise, when the current ambient temperature and the remaining charge of a driving battery both meet the electric drive heating condition, determine the electric drive active heat to be the target heat source.

In summary, in the defrosting control apparatus proposed in the present application, a target heat source capable of participating in defrosting is selected from a plurality of candidate heat sources of the thermal management system of the present application when defrosting is required for a low-temperature radiator, and heat from the target heat source is transferred, by means of liquid-liquid heat exchange and/or heat transfer through coolant circulation, to the low-temperature radiator to perform defrosting. By utilizing a defrosting loop determined based on the target heat source, the heat from the target heat source is transferred, thereby enabling recycling of heat in different branches/loops of the thermal management system and reducing defrosting energy consumption.

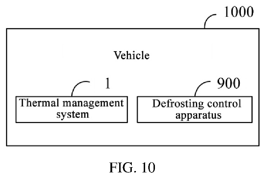

To achieve the above embodiments, as shown in FIG. 10, an embodiment of present application further proposes a vehicle 1000, including the thermal management system 1 as described in any of the above embodiments and the defrosting control apparatus 900 as described in any of the above embodiments.

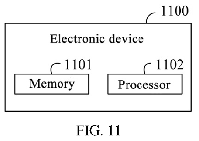

To implement the above embodiments, an embodiment of the present application further proposes an electronic device 1100. As shown in FIG. 11, the electronic device 1100 may specifically include: a memory 1101, a processor 1102, and a computer program stored on the memory 1101 and executable on the processor 1102, where the processor 1102, where executing the program, implements the steps of the defrosting control method as described in any of the above embodiments.

Those skilled in the art will understand that all or some of the processes in the above embodiments can be implemented by instructing related hardware by a computer program. The computer program can be stored in a non-volatile computer-readable storage medium. The computer program, when executed, may include the processes in the embodiments of the above methods. Any references to memory, storage, database or other media used in the embodiments provided in the present application may include non-volatile and/or volatile memory. Non-volatile memory may include read-only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in a variety of forms, such as static RAM (SRAM), dynamic RAM (DRAM), synchronous DRAM (SDRAM), dual data rate SDRAM (DDRSDRAM), enhanced SDRAM (ESDRAM), synchronous link DRAM (SLDRAM), RAMbus direct RAM (RDRAM), direct memory bus dynamic RAM (DRDRAM), and memory bus dynamic RAM (RDRAM), etc.

Those skilled in the art will clearly understand that, for the sake of convenience and brevity, the above-described division of functional units and modules is used as an example. In practical applications, the above functions can be assigned to different functional units and modules as needed, that is, the internal structure of the device can be divided into different functional units or modules to complete all or some of the functions described above.

The embodiments described above are only used to illustrate the technical solutions of the present application, and are not intended to limit same. Although the present application has been described in detail with reference to the foregoing embodiments, those skilled in the art should understand that: it is still possible to modify the technical solutions described in the foregoing embodiments, or to make equivalent substitutions for some of the technical features. These modifications or substitutions do not cause the essence of the corresponding technical solutions to deviate from the spirit and scope of the technical solutions of the various embodiments of the present application, and should all be included within the protection scope of the present application.

## Claims

1. A thermal management system, comprising: a coolant loop, and a refrigerant loop provided with a condenser and a battery chiller, wherein
the coolant loop comprises an electric water pump branch, a low-temperature heat dissipation branch provided with a low-temperature radiator, a battery cooling loop provided with the battery chiller, a heater water pump branch provided with the condenser, and a heat exchanger;
a first end of a line at one side of the heat exchanger is in communication with a first end of the heater water pump branch, and a second end of the heater water pump branch is in communication with a second end of the line at one side of the heat exchanger;
a first end of the electric water pump branch is in communication with a first end of a line at the other side of the heat exchanger, a second end of the line at the other side of the heat exchanger is in communication with a first end of the low-temperature heat dissipation branch, and a second end of the low-temperature heat dissipation branch is in communication with a second end of the electric water pump branch; and
when the thermal management system operates in an air-source heat pump mode, the low-temperature radiator is configured to absorb heat from ambient air.

2. The thermal management system according to claim 1, wherein the refrigerant loop comprises a compressor, a hot-gas bypass branch, and a heat pump branch provided with the condenser and the battery chiller, wherein the hot-gas bypass branch and the heat pump branch are connected in parallel with the compressor, respectively.

3. The thermal management system according to claim 1 or 2, wherein the coolant loop further comprises a proportional three-way valve and a coolant bypass branch, wherein
a first end of the coolant bypass branch is in communication with the first end of the heater water pump branch, and a second end of the coolant bypass branch is in communication with the second end of the heater water pump branch; and
three ports for random communication among the line at one side of the heat exchanger, the heater water pump branch, and the coolant bypass branch are communicated by the proportional three-way valve.

4. A defrosting control method, wherein based on the thermal management system according to any one of claims 1 to 3, the method comprises:
determining whether defrosting is required for the low-temperature radiator in the thermal management system;
if defrosting is required for the low-temperature radiator, selecting a heat source that meets any preset heating condition from a plurality of candidate heat sources which are in a water-source heat pump mode to be a target heat source for performing defrosting; and
determining a defrosting loop based on a heat transfer path from the target heat source to the low-temperature radiator in the thermal management system.

5. The method according to claim 4, wherein the determining whether defrosting is required for the low-temperature radiator in the thermal management system comprises:
if a heat source mode in which the thermal management system currently operates comprises the air-source heat pump mode, acquiring an ambient temperature and a coolant temperature at the inlet of the low-temperature radiator; and
according to the ambient temperature and the coolant temperature, determining whether defrosting is required for the low-temperature radiator.

6. The method according to claim 4, wherein the selecting a heat source that meets any preset heating condition from a plurality of candidate heat sources which are in a water-source heat pump mode to be a target heat source for performing defrosting comprises:
determining whether a travel state of a vehicle meets a defrosting activation condition;
if the defrosting activation condition is not met, switching the heat source mode in which the thermal management system currently operates to the water-source heat pump mode, monitoring the travel state in real time, and re-executing the step of determining whether a travel state of a vehicle meets a defrosting activation condition; and
if the defrosting activation condition is met, executing the step of selecting a heat source that meets any preset heating condition from a plurality of candidate heat sources which are in a water-source heat pump mode to be a target heat source for performing defrosting.

7. The method according to claim 6, wherein the travel state comprises a vehicle speed, and/or a duration during which the vehicle remains within a preset speed range; and
the defrosting activation condition comprises: the vehicle speed not exceeding a preset vehicle speed, and/or the duration during which the vehicle remains within the preset speed range exceeding a preset duration.

8. The method according to claim 6, wherein after the switching the heat source mode in which the thermal management system currently operates to the water-source heat pump mode, the method further comprises:
determining whether the ambient temperature at which the low-temperature radiator operates is within a preset temperature range in real time; and
if the ambient temperature at which the low-temperature radiator operates is within the preset temperature range, re-activating the air-source heat pump mode.

9. The method according to claim 4, wherein the plurality of candidate heat sources comprise engine waste heat and compressor self-generated heat; the preset heating conditions comprise an engine waste heat recovery condition, and a condition in which the candidate heat source is compressor self-generated heat; and
the selecting a heat source that meets any preset heating condition from a plurality of candidate heat sources which are in a water-source heat pump mode to be a target heat source for performing defrosting comprises:
determining whether an operating mode of a heater loop of the thermal management system is a heating mode;
if so, determining whether the engine waste heat meets the engine waste heat recovery condition;
if so, determining the engine waste heat to be the target heat source;
otherwise, determining the compressor self-generated heat to be the target heat source.

10. The method according to claim 4, wherein the plurality of candidate heat sources comprise electric drive active heat and electric drive waste heat; the preset heating conditions comprise an electric drive waste heat recovery condition and an electric drive heating condition; and
the selecting a heat source that meets any preset heating condition from a plurality of candidate heat sources which are in a water-source heat pump mode to be a target heat source for performing defrosting comprises:
if the operating mode of the heater loop is not the heating mode, determining whether the electric drive waste heat meets the electric drive waste heat recovery condition;
if so, determining the electric drive waste heat to be the target heat source;
otherwise, when the current ambient temperature and the remaining charge of a driving battery both meet the electric drive heating condition, determining the electric drive active heat to be the target heat source.

11. A defrosting control apparatus, based on the thermal management system according to any one of claims 1 to 3, the apparatus comprising:
a judgment module configured to determine whether defrosting is required for the low-temperature radiator in the thermal management system;
a heat source selection module configured to select a heat source that meets any preset heating condition from a plurality of candidate heat sources which are in a water-source heat pump mode to be a target heat source for performing defrosting if defrosting is required for the low-temperature radiator; and
a determination module configured to determine a defrosting loop based on a heat transfer path from the target heat source to the low-temperature radiator in the thermal management system.

12. A vehicle, comprising the thermal management system according to any one of claims 1 to 3 and the defrosting control apparatus according to claim 11.

13. An electronic device, comprising a memory, a processor, and a computer program stored in the memory and executable on the processor, wherein the processor, when executing the computer program, implements the steps of the defrosting control method according to any one of claims 4 to 10.

14. A computer-readable storage medium, storing a computer program, wherein the program, when executed by a processor, implements the steps of the defrosting control method according to any one of claims 4 to 10.
